# EUROPÄISCHE PATENTSCHRIFT

(11) **EP 0 925 431 B1**
(45) Veröffentlichungstag und Bekanntmachung des Hinweises auf die Patenterteilung: **25.08.2004**
(21) Anmeldenummer: 97919032.9
(22) Anmeldetag: 04.09.1997
(51) Int. Cl.: F01N 3/08, F02D 21/08, B01D 53/94

(54) **ABGASREINIGUNGSVERFAHREN FÜR EINE BRENNKRAFTMASCHINE**
EXHAUST FUME PURIFICATION PROCESS FOR AN INTERNAL COMBUSTION ENGINE
PROCEDE D'EPURATION DE GAZ D'ECHAPPEMENT POUR MOTEUR A COMBUSTION INTERNE

(30) Priorität: 05.09.1996 DE 19636040; 05.09.1996 DE 19636041
(43) Veröffentlichungstag der Anmeldung: 30.06.1999
(73) Patentinhaber: Volkswagen Aktiengesellschaft, 38436 Wolfsburg (DE)
(72) Erfinder: POTT, Ekkehard, D-38518 Gifhorn (DE)
(74) Vertreter: Pohlmann, Bernd Michael
(86) Internationale Anmeldenummer: PCT/EP1997/004804
(87) Internationale Veröffentlichungsnummer: WO 1998/010177

(56) Entgegenhaltungen:
- EP-A- 0 627 548
- EP-A- 0 732 485
- PATENT ABSTRACTS OF JAPAN vol. 096, no. 012, 26.Dezember 1996 & JP 08 196870 A (TOYOTA MOTOR CORP;TOYOTA CENTRAL RES & DEV LAB INC), 6.August 1996,
- PATENT ABSTRACTS OF JAPAN vol. 095, no. 011, 26.Dezember 1995 & JP 07 217474 A (TOYOTA MOTOR CORP), 15.August 1995,
- PATENT ABSTRACTS OF JAPAN vol. 096, no. 012, 26.Dezember 1996 & JP 08 215545 A (KOBE STEEL LTD), 27.August 1996,
- PATENT ABSTRACTS OF JAPAN vol. 096, no. 004, 30.April 1996 & JP 07 332071 A (TOYOTA MOTOR CORP), 19.Dezember 1995,

## Beschreibung

Die Erfindung betrifft ein Abgasreinigungsverfahren für eine Brennkraftmaschine gemäß dem Oberbegriff des Patentanspruchs 1 sowie eine Brennkraftmaschine gemäß dem Oberbegriff des Anspruchs 21.

Ein derartiges Verfahren bzw. eine derartige Brennkraftmaschine ist aus der EP-A-0 627 578 bekannt.

Aus der US 4,755,499 ist die reversible Speicherung von Stickoxiden und Schwefeloxiden z. B. aus Abgasen von Kraftfahrzeugen bekannt, wobei der Absorber durch Erhitzen in einer reduzierenden Atmosphäre regeneriert wird. Hierbei tritt gleichzeitig eine Reduktion der Stickoxide ein.

Ein Speicherkatalysator ist in der EP 0 580 389 A für den Einsatz bei Kraftfahrzeugen näher beschrieben, wobei auch hier hohe Temperaturen (über 500 °C) für die Regeneration des Absorbers notwendig sind. Hierdurch ist der Einsatz des Speicherkatalysators nur bei Kraftfahrzeugen möglich, die eine hohe Abgastemperatur haben, d. h. insbesondere bei Kraftfahrzeugen mit einem Otto-Motor. Jedoch ist auch hier der Einsatz nur bedingt möglich, da unter bestimmten Betriebsbedingungen der Verbrennungskraftmaschine, wie sie beispielsweise im Stadtverkehr gegeben sind, durch die Beschleunigungsphasen ein hoher Stickoxidausstoß erfolgt, nicht jedoch eine hohe Temperatur erreicht wird, die für die Regeneration des Absorbers, insbesondere von Schwefeloxiden, erforderlich ist.

Aus der EP 0 560 991 A ist ein Otto-Motor mit einem Speicherkatalysator sowie je einem vor- und nachgeschalteten Dreiwegekatalysator bekannt. Durch die motomahe Anordnung des dem Absorber vorgeschalteten Dreiwegekatalysators heizt sich dieser nach einem Kaltstart des Otto-Motors sehr schnell auf, so daß er frühzeitig seine katalytische Aktivität erreicht. Nach Erreichen seiner katalytischen Aktivität setzt der vorgeschaltete Dreiwegekatalysator die während der Warmlaufphase der Ottobrennkraftmaschine vermehrt vorliegenden HC und CO um, wobei gleichzeitig NOx reduziert wird. Hierdurch wird erreicht, daß während einer Warmlaufphase der Ottobrennkraftmaschine eine NOx-Reduktion im Abgas stattfindet, obwohl der NOx-Speicher noch nicht die für die Speicherung von NOx notwendige Temperatur erreicht hat. Diese Anordnung und Verfahrensweise ist nur bei Otto-Motoren sinnvoll, da Diesel-Motoren auch während der Warmlaufphase nicht genügend CO und HC emittieren, um den NOx-Anteil der Abgase genügend zu reduzieren. Abgesehen von der besseren Abgasreinigung während der Warmlaufphase zeigt der Otto-Motor mit Vorkatalysator keine verbesserte NOx-Reduktion. Des weiteren sind aus dieser Veröffentlichung zwei Verfahren zur NOx-Reduktion bei Dieselbrennkraftmaschinen bekannt, die zum einen auf einer Drosselung der Luftzufuhr zu der Dieselbrennkraftmaschine und zum anderen auf einer Kraftstoffeindüsung beruhen. Dieselbrennkraftmaschinen, die mit solchen NOx-Speichern ausgerüstet sind, zeigen jedoch bei höheren Abgastemperaturen eine deutliche Abnahme der NOx-Speicherung im NOx-Speicher.

Die EP 0 581 279 A beschreibt ähnlich wie die EP 0 580 389 A einen Speicherkatalysator für Stickoxide, wobei dem Speicherkatalysator ein Katalysator mit einer Sauerstoffspeicherfunktion nachgeschaltet ist. Hierdurch soll erreicht werden, daß ein Überschuß an unverbranntem HC und CO während des Regenerierens des NOx-Speicherkatalysators an dem nachgeschalteten Sauerstoff-Speicherkatalysator oxidiert wird.

Einen Katalysator ohne besondere Speicherfunktion beschreibt die EP 0 496 526 A. Dieser Katalysator ist mehrstufig aufgebaut, wobei in einer ersten Stufe NO zu N₂O und NO₂ umgesetzt wird, die in der zweiten Stufe ohne zusätzliche größere Mengen an HC zersetzt werden sollen. Solche Katalysatoren haben in Feldversuchen regelmäßig NOx-Umsatzraten ≤ 50 % erreicht.

Ebenfalls einen Nicht-Speicherkatalysator beschreibt die EP 0 533 460 A. Dieser Katalysator ist dreistufig aufgebaut und enthält als erste Stufe einen Übergangs-Metall-Zeolit-Katalysator, dem ein Drei-Wege-Katalysator und ein reiner Edelmetall-Katalysator folgt. Am ersten Katalysator nicht umgesetztes NOx soll am zweiten Katalysator zu NO₂ und am dritten zu N₂ und O₂ zersetzt werden. Hohe Umsatzraten konnten mit solchen Katalysatoren in der Praxis bei magereren Brennkraftmaschinen nicht erzielt werden.

Die DE 195 38 682 A beschreibt eine Motorsteuer-Vorrichtung, bei der die Brennkraftmaschine zwischen stöchiometrisch und mager betrieben werden kann. Die Abgasnachbehandlung erfolgt über einen konventionellen Drei-Wege-Katalysator.

Die EP-0 732 485 A beschreibt eine Abgasreinigungsanlage für eine Dieselbrennkraftmaschine mit einem NOx-absorbierenden Katalysator. Zum Regenerieren wird die Art der Einspritzung verändert, um ein fettes oder stöchiometrisches Gemisch zu erhalten.

Die DE 43 28 085 A beschreibt ein Rückführsystem für Abgase, das Abgase nach einem Katalysator und vor einem Schalldämpfer der Abgasanlage entnimmt und über ein Steuerventil der Einlassluft der Brennkraftmaschine zuführt. Das Abgasventil ist als Ventilschieber aufgebaut, dessen Öffnungsfläche in Abhängigkeit eines von einer Motorsteuereinheit gelieferten Stroms verändert wird.

Die DE 195 432 19 beschreibt ähnlich wie die EP 0 732 485 A eine Dieselbrennkraftmaschine mit einem Speicher-Katalysator und einer Abgasrückführung, die der Veränderung des Gemisches dient.

Die DE 44 26 788 A beschreibt ein Abgasreinigungsverfahren an einer Brennkraftmaschine, das die Alterung eines Katalysators berücksichtigt.

All diesen Ausführungen ist gemeinsam, dass bei direkteinspritzenden Brennkraftmaschinen und/oder Dieselbrennkraftmaschinen das Fettfahren der Brennkraftmaschine für eine Regeneration des NOx-Speichers oftmals problematisch ist. So kann hierbei die Temperatur der Abgase einerseits zu hoch sein, andererseits kann ein zu hoher Leistungsabfall die Folge sein. Hinzu kommt außerdem, dass mit diesen bekannten NOx-Katalysatoreinrichtungen sich oft nur mittlere Reinigungswerte erzielen lassen und die Langzeitstabilität problematisch ist.

Aus der JP-A-08 215 545 ist ein Verfahren zur Entfernung von NO aus einem Gasstrom bekannt, bei dem nicht absorbiertes NO zu NO2 durch einen NO oxidierenden Katalysator oxidiert wird. Angaben über die Dimensionierung des Katalysators oder seine Beladung mit Platin zur Optimierung der Abgasreinigung sind diesem Dokument nicht zu entnehmen. Aus der JP-A-08 196 870 ist ein Abgasreinigungssystem bekannt, bei dem ein NOx-Speicherkatalysator zwar Einspeicherung von magerem Abgas und einer Desorption von fettem Abgas vorgesehen ist. Dem NOx-Speicherkatalysator ist ein Dreiwegekatalysator zur Reduktion von NO2 im fettem Abgas nachgeordnet. Ferner ist aus der EP 0 627 548 A1 ein Abgasreinigungssystem mit einem Dreiwegekatalysator und einem nachgeordnetem NOx-Absorber bekannt. Femer ist aus der EP 0 601 314 A1 ein Abgasreinigungssystem zur Verminderung der Kohlenwasserstoffemission während des Kaltstarts von Verbrennungskraftmaschinen bekannt. Es wird dabei vorgeschlagen, Oxidations- oder Dreiwegkatalysatoren zu verwenden, die gegenüber üblichen Katalysatoren eine wenigstens doppelt so hohe Beladung mit Platin und/oder Palladium aufweisen.

Aufgabe der vorliegenden Erfindung ist es, ein Verfahren zum Betrieb einer selbstzündenden Brennkraftmaschine mit einem Absorber für Stickoxide zur Verfügung zu stellen, bei dem eine Sauerstoffabsenkung im Abgas zur Regeneration des NOx-Speichers ohne eine Gefahr der Überhitzung der Abgase und/oder mit einer verringerten Leistungseinbuße möglich sein soll. Mit zur Aufgabe gehört außerdem eine entsprechende Brennkraftmaschine.

Bei dem eingangs beschriebenen Verfahren wird diese Aufgabe gelöst mit den Merkmalen des Anspruchs 1 sowie hinsichtlich der Brennkraftmaschine mit den Merkmalen gemäß Anspruch 21.

Die Unteransprüche zeigen bevorzugte Ausführungsformen, mit denen insbesondere auch bei sehr niedrigen Abgastemperaturen, wie sie bei direkteinspritzenden Verbrennungskraftmaschinen vorliegen, ein früher Einsatz der Absorberfunktion nach einem Kaltstart möglich ist. Außerdem wird mit den Unteransprüchen auch bei unterschiedlichen Betriebsbedingungen der Brennkraftmaschine eine komfortable Regeneration des NOx-Speichers erreicht.

Bei dem erfindungsgemäßen Abgasverfahren an einer selbstzündenden Brennkraftmaschine (Dieselbrennkraftmaschine) werden die Abgase der Brennkraftmaschine einem NOx-Speicher zugeführt, der unter ersten Betriebsbedingungen NOx aus dem zugeführten Abgas speichert. Die ersten Betriebsbedingungen sind insbesondere solche, bei denen im Abgas nettooxidierende Bedingungen (λ> 1 und insbesondere λ > 1,1) vorliegen, wobei die Temperatur des Abgasstroms oberhalb 150 °C und insbesondere oberhalb 200 °C liegen soll. Unter zweiten Betriebsbedingungen, die von den ersten Betriebsbedingungen unterschiedlich sind, gibt der NOx-Speicher das gespeicherte NOx wieder ab, wobei dieses insbesondere unmittelbar bzw. sofort reduziert wird. Die zweiten Betriebsbedingungen sind insbesondere solche, bei denen das Abgas eine für die Reduktion der gespeicherten Stickoxide ausreichende Menge an Reduktionsmittel mit sich führt. Dies ist insbesondere bei einem λ (stöchiometrisches Luft-Kraftstoff-Verhältnis) ≤ 1,05 und insbesondere λ ≤ 1,0 der Fall. Es wurde gefunden, dass die NOx-Reduzierung erheblich gesteigert werden kann, wenn dem NOx-Speicher stromaufwärts im Abgasstrom ein Konverter vorgeschaltet wird, der bei einer Temperatur ≥ 230 °C mindestens 50 % des im Abgasstrom enthaltenen NO zur NO2 umsetzt. Vorzugsweise erreicht der Konverter diesen Umsetzungsgrad bereits bei einer Temperatur ≥ 200 °C und insbesondere bei der Temperatur ≥ 180 °C. Üblicherweise erreichen solche Konverter eine mindestens 90-%ige Umsetzung des NO bei einer Temperatur ≥ 250 °C.

Das in den Abgasen der Dieselbrennkraftmaschine vorliegende NO₂/NO-Verhältnis wird vergrößert, wodurch dem nachfolgenden Speicher insbesondere in der Warmlaufphase der Dieselbrennkraftmaschine weniger NO zugeführt wird.

Für solche NOx-Behandlungen eignen sich alle Verfahren, die eine Vergrößerung des NO₂-Anteils an den Stickoxiden bewirken, beispielsweise elektrische Entladungen im Abgassystem, bevorzugt Barriereentladungen, sowie katalytische Verfahren, insbesondere Oxidationskatalysatoren. Unter diesen sind insbesondere Oxidationskatalysatoren mit einem Element der Platingruppe und hier wiederum Platin selbst besonders bevorzugt. Solche Katalysatoren sind prinzipiell als Abgasnachbehandlungskatalysatoren für Dieselbrennkraftmaschinen bekannt.

Im Gegensatz zum Einsatz eines dem NOx-Speicher vorgeschalteten Dreiwegekatalysators in Otto-Motoren ist es bei dem erfindungsgemäßen Verfahren bei der Abgasreinigung von Dieselbrennkraftmaschinen nicht notwendig, daß dem Konverter Reduktionsmittel für die Stickoxidreduktion zugeführt werden müssen, wobei die minimalen Mengen an CO und HC, die in den Dieselabgasen vorliegen, nicht schädlich sind. Tatsächlich enthalten die Dieselabgase NOx im stöchimetrischen Überschuß zu CO und HC. Das erfindungsgemäße Verfahren beruht vermutlich vielmehr darauf, daß durch das Anströmen des NOx-Speichers mit NO-armem aber NO₂-reichem Abgas die Physisorption (Adsorption) von NO bei relativ niedrigen Temperaturen des NOx-Speichers, d. h. insbesondere bei Temgeraturen ≤ 200 °C und besonders bei Temperaturen ≤ 180 °C gemindert wird. Es wurde festgestellt, daß das NO eine teilweise Blockade des NOx-Speichers bewirkt, indem die Chemiesorption (Absorption) von NO₂ durch das angelagerte NO gemindert wird. Durch den dem NOx-Speicher vorgeschalteten Konverter wird bei dem erfindungsgemäßen Verfahren erreicht, daß die bei Dieselmotoren beim Kaltstart vorliegende Physisorptionsphase von NO stark reduziert wird.

Die deutliche NOx-Reduktion im von der Dieselbrennkraftmaschine an die Umgebung abgegebenen Abgas wird vermutlich durch folgenden Reaktionsablauf erreicht:
- ab ca. 150 °C absorbiert der NOx-Speicher NO₂;
- bis ca. 180 °C lagert der NOx-Speicher NO ein;
- ab ca. 200 °C erfolgt am NOx-Speicher eine Oxidation von NO zu NO₂, sofern der NOx-Speicher eine Edelmetallbeschichtung (Platin) hat;
- die NO-Einlagerung blockiert die NO₂-Speicherung, wodurch, insbesondere bei hohen Raumgeschwindigkeiten, die NOx-Speicherfähigkeit des NOx-Speichers nachläßt;
- bei Temperaturen oberhalb ca. 250 °C erfolgt eine Desorption von NO, ggf. unter Oxidation des NO zu NO₂, wobei ein beträchtlicher Teil des desorbierten NOx wegen der teilweisen Blockierung des Speichers nicht sofort wieder als NO₂ eingespeichert werden kann und ins Freie emittiert wird;
- der motornah angeordnete Konverter erreicht schnell seine NO zu NO₂-Konvertierungstemperatur von ca. 200 °C, bevor der NOx-Speicher seine NO-Einlagerungstemperatur erreicht, hierdurch wird dem NOx-Speicher nahezu kein NO zugeführt in der Phase, in der der NOx-Speicher NO zwar anlagern aber nicht zu NO₂ umsetzen kann.

Auf Grund der anderen Arbeitsweise von Otto-Motoren tritt hier das beschriebene Problem nicht auf.

Die angegebenen Temperaturen können je nach Ausführung des NOx-Speichers um 20 bis 50 K oder mehr abweichen. Die Temperaturen beziehen sich bei der beispielhaften Reaktionsfolge auf jeweils mindestens 50 % Umsetzung bzw. Speicherung.

Durch eine Vermeidung von NO-Einlagerung in den NOx-Speicher wird der Ausstoß von NOx vermindert. Dies zeigt sich beispielsweise in einem MVEG-Test mit einem direkt einspritzenden Dieselmotor mit 66 kW Leistung bei 1,9 l Hubraum. Hier kommt es ohne Einsatz eines NO/NO₂-Konverters zu einer starken Desorption im ersten Teil des EUDC-Abschnitts, mit Vorkatalysator tritt dieser Effekt nicht auf. Durch die Verlagerung der NO-Oxidation auf den Vorkatalysator wird am NOx-Speicher bei höheren Temperaturen und Raumgeschwindigkeiten außerdem eine höhere NOx(NO₂)-Speicherrate erzielt, da an dem NOx-Speicher nicht mehr zusätzlich zu der vergleichsweisen trägen Sorptionsreaktion auch noch die Oxidation von NO zu NO₂ erfolgen muß.

Der Konverter ist nahe am Abgasauslaß der Dieselbrennkraftmaschine angeordnet, d. h. vorteilhaft in einem Abstand ≤ 1 m und insbesondere in einem Abstand ≤ 70 cm.

Besonders vorteilhaft ist der Konverter als Metallkonverter ausgeführt, d. h. der Träger für die katalytisch wirksame Schicht wird aus einer Metallfolie hergestellt. Bevorzugt wird hierbei eine Metallfolie mit einer Dicke von ≤ 50 µm und insbesondere mit einer Dicke von ≤ 40 µm eingesetzt, wodurch ein besonders schnelles Aufheizen des Konverters auf seine Betriebstemperatur gewährleistet ist. Außerdem hat es sich herausgestellt, daß der Konverter vorzugsweise ein Gesamtvolumen von 10 bis 25 % und insbesondere von 15 bis 20 % des Motorhubraums der Dieselbrennkraftmaschine aufweist, da sich bei diesem Verhältnis optimale NOx-Reinigungswerte erzielen lassen. Weiterhin hat der Konverter eine Platinbeladung von ≥ 60 g/ft³. Diese Dimensionierung des Konverters ist deutlich unterschiedlich zu den üblicherweise bei Dieselbrennkraftmaschinen im Abgasstrom eingesetzten Oxidationskatalysatoren, die üblicherweise eine Platinbefadung von deutlich weniger als 50 g/ft³ auf Keramikträgem haben. Der Absorptionsspeicher hat hingegen eine niedrigere Platinbelegung, d. h. insbesondere mit ≤ 50 g/ft³ Platin.

Es können die üblichen absorbierenden Materialien eingesetzt werden, wie sie beispielsweise in der US 4,755,499, aber auch in der EP 0 580 389 A oder WO 94-04258 beschrieben sind. All diesen Speichermaterialien ist gemeinsam, daß sie eine erhöhte Arbeitstemperatur haben, wobei insbesondere beim Regenerieren (insbesondere beim Entfernen der Schwefeloxide) eine noch höhere Temperatur erforderlich ist. Bei den meisten Speichermedien dieser Art werden Temperaturen im Bereich von 150 °C bis 700 °C, insbesondere Temperaturen oberhalb 300 °C benötigt.

Die bevorzugten NOx-Speichermaterialien zeichnen sich also dadurch aus, daß sie unter nettooxidierenden Bedingungen (stöchiometrischer Überschuß an Oxidationsmitteln), wie sie im Abgas vorliegen, Stickoxide zwischenspeichern und bei einer Verringerung des Sauerstoffüberschusses reduzieren können. Hierzu sind die NOx-Speicherkatalysatoren üblicherweise auch edelmetallbeschichtet, insbesondere mit den üblichen Edelmetallbeschichtungen für Dreiwegekatalysatoren. Die Regeneration des mit NOx beladenen Speichermaterials erfolgt dann vorteilhaft bei λ ≤ 1 in einer Regenerierphase.

Üblicherweise laufen an den NOx-Speicherkatalysatoren verschiedene Reaktionen nacheinander bis gleichzeitig ab, wobei die wichtigsten Reaktionen
- Oxidation des NO im Abgas zur NO₂
- Speicherung des NO₂ als Nitrat
- Zersetzung des Nitrats
- Reduktion des zurückgebildeten NO₂ zu Stickstoff und Sauerstoff
sind.

Wie oben beschrieben, ist der Verlauf der Reaktionen unter anderem abhängig von der Temperatur des Katalysators, aber auch von der Konzentration der Reaktionspartner am aktiven Zentrum des Katalysators und der Strömungsgeschwindigkeit des Gases.

Mit verschiedenen Faktoren, die miteinander kombinierbar sind, ist es auch mit nur geringem Aufwand möglich, den Abgasabsorber zu optimieren. Die wesentlichen Merkmale sind hierbei:
- Verringerung der Wandstärke des Trägerkörpers, auf dem die Absorptionsschicht aufgebracht ist, auf ≤ 160 µm, insbesondere ≤ 140 µm;
- Verwendung von Metallträgern, vorteilhaft mit einer Wandstärke ≤ 50 µm, vorzugsweise ≤ 40 µm und insbesondere ≤ 30 µm; und/oder
- Heizen des Absorbers auf eine Temperatur oberhalb der Temperatur des Abgasstromes.

Es hat sich gezeigt, daß bei der Verwendung dünnwandiger keramischer Träger für die Absorptionsschicht, d. h. insbesondere von Trägerkörpem mit einer Wandstärke ≤ 0,14 mm, nicht nur ein schnellerer Temperaturanstieg der Absorptionsschicht möglich ist, sondern auch eine dickere Absorptionsschicht eingesetzt werden kann. Hierdurch wird zweierlei erreicht: zum einen können auch kurze. Hochtemperaturphasen zum Regenerieren ausgenutzt werden, da die Speicherschicht schneller die höhere Temperatur annimmt, und zum anderen kann durch Auftragen einer dickeren Absorptionsschicht eine höhere Speicherkapazität erreicht werden, so daß über die längere Speicherfähigkeit des Absorbers beim Betrieb der Verbrennungskraftmaschine eine längere Zeitspanne verstreichen kann, bis der Speicher zu Regenerieren ist, so daß trotz der seltener auftretenden Temperaturspitzen im Abgasstrom von verbrauchsoptimierten Verbrennungskraftmaschinen kein Durchschlagen des Speichers (Erreichen der Sättigungsgrenze) erfolgt.

Insbesondere Absorber mit einem Trägerkörper aus Metallfolie sind geeignet, wobei die Metallfolie vorteilhaft noch als Widerstandsheizung geschaltet werden kann, so daß auch bei niedrigen Abgastemperaturen der Absorber auf die notwendige Regenerationstemperatur durch Leiten eines elektrischen Stromes durch den Metallträgerkörper gebracht werden kann. Außerdem lassen sich bei der Verwendung eines Metallträgerkörpers die Kanäle, die mit der Absorptionsschicht beschichtet sind, unterschiedlich gestalten, so daß beispielsweise eine Verwirbelung (turbulente Strömung) des Abgasstromes in den Kanälen gezielt einstellbar ist.

Für die Erzielung besonders guter Umsätze hat die Absorptionsschicht eine vergrößerte Oberfläche von mindestens 20 m²/g, insbesondere mindestens 40 m²/g. Vorteilhaft hat die Absorptionsschicht vorzugsweise ein Porenvolumen von mindestens 0,2 cm³/g und insbesondere mindestens 0,4 cm³/g, wobei auch eine bimodale Porengrößenverteilung geeignet ist mit Mikroporen und Makroporen. Dies wird beispielsweise durch die Wahl einer bestimmten Partikelgröße für die Bildung der Absorberoberfläche erreicht, wobei auch Mischungen oder bestimmte Verteilungen unterschiedlicher Partikelgrößen geeignet sind.

Als Absorptionsoberfläche eignet sich insbesondere γ-Aluminiumoxid, das mit einem oder mehreren Elementen aus der Gruppe der Alkalimetalle, Erdalkalimetalle, seltenen Erden und/oder Lanthan beladen ist. Auch Kupfer und Mangan sind geeignete Elemente. Die Elemente liegen üblicherweise als Oxid, aber auch als Carbonat oder Nitrat vor, wobei die Speicherwirkung durch Bildung entsprechender Nitrate und Sulfate erzielt wird, die dann unter den entsprechenden Reaktionsbedingungen wieder zu Oxiden oder Carbonaten überführt werden. Hierdurch ist es möglich; NOx und/oder SOx insbesondere aus einem Abgas, das mindestens 1 % Sauerstoff enthält, zu absorbieren.

Wie beschrieben, werden die absorbierten Stoffe insbesondere durch erhöhte Temperaturen und in reduzierender Atmosphäre wieder freigesetzt. Hierzu ist es vorteilhaft, wenn im Abgas die Sauerstoffkonzentration ermittelt wird, wobei dann die Sauerstoffkonzentration oder eine mit der Sauerstoffkonzentration in bekannter Beziehung stehende Größe zur Steuerung des Absorptions- bzw. Desorptionsvorganges herangezogen werden kann. Entsprechendes gilt auch für die Temperatur des Abgasstroms, wobei entscheidend die Temperatur der Absorptionsschicht ist, die unmittelbar oder mittelbar bestimmt wird. So kann die Temperatur beispielsweise durch Messung der Temperatur des Abgasstroms bzw. des Trägerkörpers gemessen werden; auch eine Temperaturbestimmung über ein Kennfeld der Verbrennungskraftmaschine ist möglich.

Vorzugsweise werden die Absorptionsschichten in einer Dicke von mindestens 50 µm, insbesondere mindestens 70 µm und besonders vorteilhaft mindestens 90 µm hergestellt (durchschnittliche Schichtdicke eines Querschnitts; Werte gelten für Keramik, bei Metall gelten die halben Werte) wobei sich diese Schichtdicke der Absorptionsschicht über vorzugsweise mindestens 50 % und insbesondere mindestens 80 % des Absorbers erstreckt. Solche Schichtdicken ermöglichen gegenüber den herkömmlichen Absorbern eine höhere Speicherkapazität und damit die oben beschriebenen längeren Intervalle bis zur Regeneration.

Da für die Freisetzung und Umsetzung des NOx aus dem Speicher und die Freisetzung der Schwefeloxide aus dem Speicher unterschiedliche Temperaturen notwendig sind (beim letzteren höhere), kann außerdem so verfahren werden, daß eine Desorption der Schwefeloxide (die insbesondere als Sulfat vorliegen) in größeren Zeitspannen bzw. bei Bedarf vorgenommen wird, so daß der Speicher nur gelegentlich auf die hohen Temperaturen erhitzt wird, die für eine Desorption der Schwefeloxide notwendig sind. Auch hierdurch wird einer frühzeitigen Alterung des Speichers entgegengewirkt, so daß eine besonders gute Langzeitstabilität des Absorbers erreicht wird.

Die mit zur Erfindung gehörende Dieselbrennkraftmaschine mit einer Abgasreinigung enthält die in dem Anspruch 21 beschriebenen Merkmale.

Die Erfindung wird im folgenden anhand von Ausführungsbeispielen und Zeichnungen näher beschrieben.

Es zeigen:
- Figur 1: eine Dieselbrennkraftmaschine mit Abgasreinigung;
- Figur 2: ein NOx-Speicherverhalten mit und ohne Konverter; und
- Figur 3: eine Dieselbrennkraftmaschine mit Abgasreinigung und Abgasrückführung.

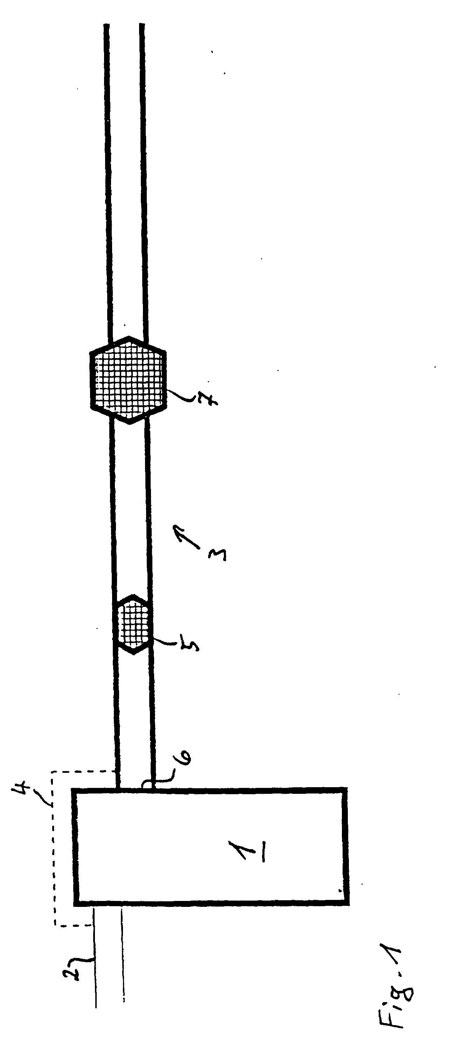

Die in Figur 1 dargestellte Brennkraftmaschine 1 (1,9 l, 4 Zyl., Dieseldirekteinspritzer. 66 kW) hat einen Lufteinlaßkanal 2 und eine Abgasanlage 3. Von der Abgasanlage 3 führt eine Abgasrückführungsleitung 4 zu dem Lufteinlaß 2, mittels der insgesamt eine Reduzierung der NOx-Rohemissionen erfolgt.

In der Abgasanlage 3 ist motornah ein Konverter 5 angeordnet, der ein Volumen von 15 % des Hubraums der Dieselbrennkraftmaschine 1 hat. Der Abstand zwischen dem Abgasauslaß 6 und dem Konverter 5 beträgt ca. 20 cm. Außerdem ist in der Abgasanlage 3 ca. 70 cm nach dem Konverter 5 ein üblicher NOx-Speicherkatalysator 7 angeordnet, nach dem die Abgase ins Freie gelangen.

Der Konverter 5 hat einen Metallfolienträgerkörper, auf dem ein γ-Aluminiumoxid-washcoat mit einer Platinbeladung von 70 g/ft³ aufgetragen ist. Der NOx-Speicherkatalysator ist aus einem wabenförmigen Keramikträger aufgebaut, auf dem ein γ-Aluminiumoxid-washcoat mit Barium, Lanthan und Natrium aufgebracht ist. Außerdem hat der Speicherkatalysatorwashcoat eine Platinbeladung von 46 g/ft³.

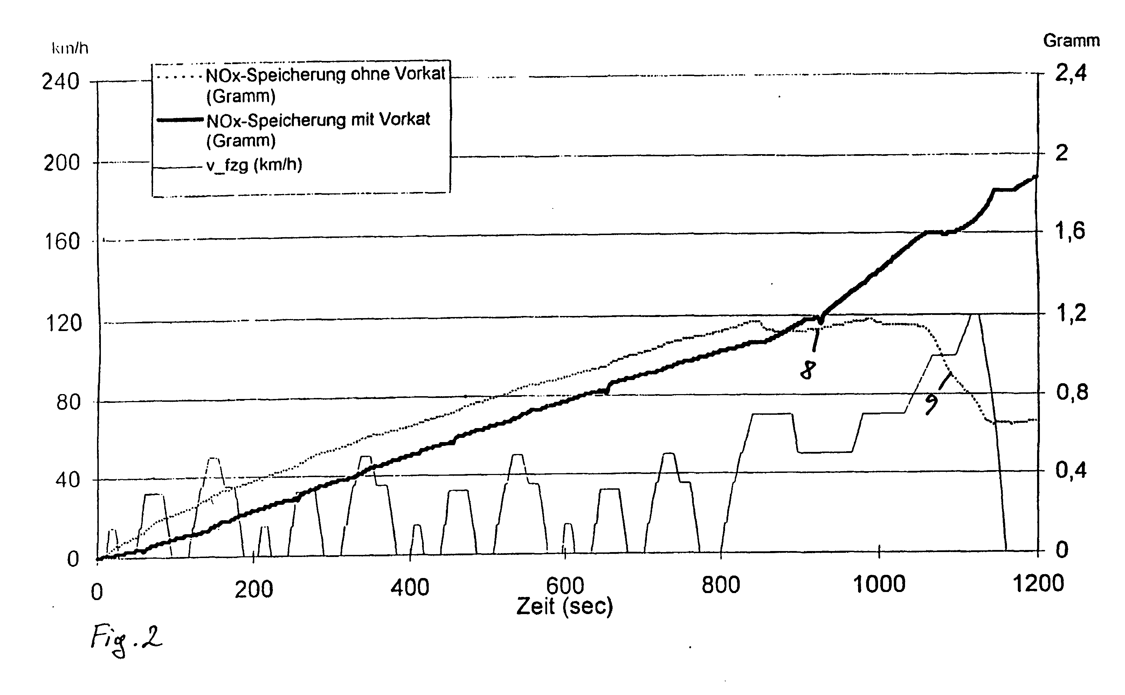

In Figur 2 ist das NOx-Speicherverhalten des NOx-Speicherkatalysators 7 dargestellt, mit und ohne Einsatz des Konverters 5. Das Speichervermögen wurde im MVEG-Test aufgenommen. Hierbei zeigt es sich, daß das NOx-Speicherverhalten des Speicherkatalysators 7 über ca. ²/₃ der Testzeit ohne Einsatz des Konverters 5 leicht höher liegt als mit Einsatz des Konverters, was der NO-Adsorption des NOx-Speicherkatalysators zuzuschreiben ist. Sobald jedoch in dem Test höhere Abgastemperaturen erreicht werden, zeigt der Speicherkatalysator 7 eine Stagnation 8 bei der NOx-Speicherung. Diese Stagnation 8 liegt vermutlich in einer Blockierung der NO₂-Absorption bei verhältnismäßig hohen Raumgeschwindigkeiten durch adsorbiertes NO. Bei einem weiterem Anstieg der NOx-Speicherkatalysatortemperatur und einem weiteren Anstieg der Raumgeschwindigkeit der Abgase kommt es zu einem starken Einbruch des NOx-Speicherverhaltens resultierend in einer Abnahme 9 des gespeicherten NOx. Dies kann vermutlich einer Desorption von NO zugeschrieben werden, das dann bei den hohen Raumgeschwindigkeiten und aufgrund der noch vorliegenden Speicherblockierung durch noch angelagertes NO nicht mehr zu NO₂ oxidiert und eingelagert werden kann.

Durch Einsatz des Vorkatalysators 5 erhält man auch bei hohen Abgastemperaturen und hohen Raumgeschwindigkeiten ein Zunahme der NOx-Speicherung.

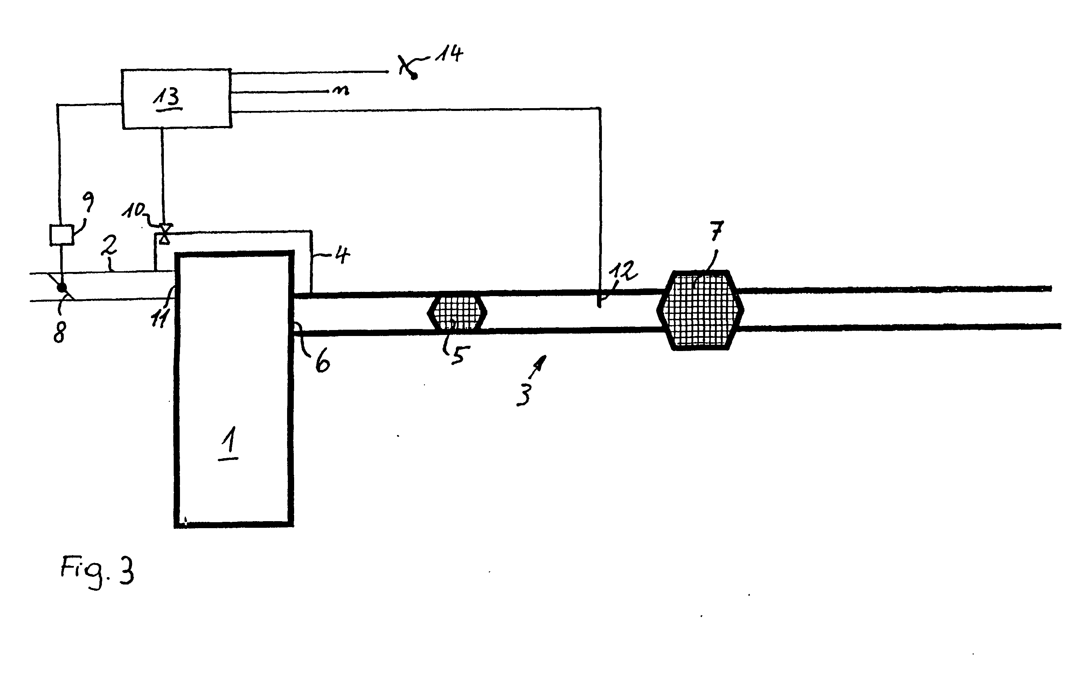

Die in der Figur 3 dargestellte Brennkraftmaschine 1 (1,9 l, 4 Zyl., Dieseldirekteinspritzer, 66 kW) ist prinzipiell aufgebaut wie in Fig. 1 beschrieben.

In dem Lufteinlaßkanal 2 ist stromauf der Einmündung der Abgasrückführungsleitung 4 eine Drosselklappe 8 angeordnet, die mittels eines Stellmotors 9 zu öffnen und verschließbar ist.

In der Abgasrückführungsleitung 4 sitzt ein Stellventil 10, über das die von der Abgasanlage 3 zu dem Lufteinlaß 11 der Brennkraftmaschine 1 zurückgeführte Abgasmenge kontrollierbar ist.

Ferner ist vor dem NOx-Speicher 7 in die Abgasanlage 3 eine Breitbandlambdasonde 12 eingeführt, über die ermittelbar ist, ob das Abgas in der Abgasanlage 3 sauerstoffhaltig, ausgeglichen oder fett ist. Die Signale der Breitbandlambdasonde 12 werden einer Steuerung 13 zugeführt, die wiederum den Stellmotor 9 der Lufteinlaßdrossel 8 und das Stellventil 10 in der Abgasrückführung 4 ansteuert. Femer erhält die Steuerung 13 weitere motorrelevante Werte, wie die Drehzahl n und einen Lastwert, beispielsweise von einem Fahrpedal 14.

Im Normalbetrieb der Brennkraftmaschine 1 ist die Drosselklappe 8 voll geöffnet und (bei einer Abgastemperatur ca. ≥ 150 °C) der NOx-Speicher 7 speichert im wesentlichen NO₂ ein, das in den Abgasen der Brennkraftmaschine 1 vorliegt bzw. in dem Konverter 5 durch Oxidation von NO aus dem Abgas erhalten wurde. Während des Betriebs der Brennkraftmaschine unter den ersten Betriebsbedingungen (lean) werden von der Steuerung 13 über ein Kennfeld und die eingehenden Motordaten die Stickoxidwerte des Abgasstroms und damit eine Stickoxidbelegung des NOx-Speichers 7 ermittelt. Bei Erreichen einer ca. 50-%igen Belegung des NOx-Speichers 7 mit NO₂ erfolgt über die Steuerung 13 eine Regeneration des NOx-Speichers 7. Hierzu wird die Drosselklappe 8 teilweise geschlossen, so daß die Frischluftzufuhr zu dem Lufteinlaß 11 stark verringert ist. Gleichzeitig wird das Stellventil 10 geöffnet, so daß eine hohe Abgasrückführungsrate erreicht wird. Hierdurch wird erreicht, daß die Brennkraftmaschine mit einem Luftunterschuß (fett) fährt, wofür ggf. auch die Kraftstoffeinspritzmenge in den Brennraum der Brennkraftmaschine 1 erhöht werden kann.

Die in der Regenerationsphase (zweiten Betriebsbedingungen) ggf. noch im Abgasstrom vorliegenden Sauerstoffreste werden an dem Konverter 5 mit den in dem Abgasstrom vorliegenden HC- und CO-Emissionen umgesetzt, so daß am Eingang des NOx-Speichers 7 (kontrolliert über die Breitbandlambdasonde 12) ein sauerstoffreies Abgas zur Verfügung steht. Insbesondere mit den in dem Abgasstrom noch vorliegenden CO-Emissionen, aber auch mittels der HC-Reste, werden die im NOx-Speicher 7 eingelagerten Stickoxide auf dem Edelmetall des NOx-Speichers umgesetzt. Nach wenigen Sekunden ist der NOx-Speicher 7 regeneriert, so daß die Steuerung 13 die Drosselklappe 8 und das Stellventil 10 wieder in die Position für die ersten Betriebsbedingungen zurückstellt.

Durch die Erhöhung der EGR wird erreicht, daß keine Überhitzung der Abgase der Brennkraftmaschine stattfindet, wodurch zum einen der Konverter 5 und der NOx-Speicher 7 geschont werden und zum anderen eine verringerte Kraftstoffmenge für die Regeneration des NOx-Speichers 7 notwendig ist.

## Patentansprüche

1. Abgasreinigungsverfahren für eine selbstzündende Brennkraftmaschine, bei dem die Abgase der Brennkraftmaschine einem NOx-Speicher zugeführt werden, der geeignet ist, unter ersten Betriebsbedingungen NOx aus dem zugeführten Abgas zu speichern und aus dem unter zweiten Betriebsbedingungen das gespeicherte NOx zur Reduktion desselben wieder freigesetzt wird, **dadurch gekennzeichnet, dass** das Abgas, bevor es dem NOx-Speicher unter den ersten Betriebsbedingungen zugeführt wird, durch einen Konverter geleitet wird, in dem ein in den Abgasen vorliegendes NO2/NO -Verhältnis vergrößert wird, dass der Konverter ein Gesamtvolumen von 10 bis 25 % des Hubraums der Brennkraftmaschine und eine Platinbeladung von ≥ 60 g/ft³ und der NOx-Speicher eine niedrigere Platinbelegung hat.

2. Verfahren nach Anspruch 1, **dadurch gekennzeichnet, dass** der NOx-Speicher eine Platinbelegung ≤ 50 g/ft3 aufweist.

3. Verfahren nach Anspruch 1, **dadurch gekennzeichnet, dass** über eine Abgasrückführung ein Teilstrom der Abgase dem Luftansaugtrakt der Brennkraftmaschine zugeführt wird unter Bildung eines Abgasteilstrom/Ansaugluft-Verhältnisses unter den ersten Betriebsbedingungen und das Abgasteilstrom/Ansaug-Verhältnis unter den zweiten Betriebsbedingungen verkleinert wird.

4. Verfahren nach zumindest einem der vorhergehenden Ansprüche, **dadurch gekennzeichnet, dass** vor dem NOx-Speicher eine Breitbandlambdasonde vorgesehen ist, deren Signale einer Steuerung als Eingangsgröße gegeben werden, die ein Beladen bzw. Entladen des NOx-Speichers veranlasst.

5. Verfahren nach zumindest einem der vorhergehenden Ansprüche, **dadurch gekennzeichnet, dass** die Brennkraftmaschine eine Kraftstoffdirekteinspritzung besitzt.

6. Verfahren nach zumindest einem der vorhergehenden Ansprüche, **dadurch gekennzeichnet, dass** die Brennkraftmaschine eine Dieselbrennkraftmaschine ist

7. Verfahren nach zumindest einem der vorhergehenden Ansprüche, **dadurch gekennzeichnet, dass** in dem Konverter bei einer Temperatur ≥ 230 °C mindestens 50 % des im Abgas enthaltenden und mit dem Abgas in den Konverter geführten NO zu NO₂ umgesetzt wird.

8. Verfahren nach zumindest einem der vorhergehenden Ansprüche, **dadurch gekennzeichnet, dass** als Konverter ein Oxidationskatalysator eingesetzt wird.

9. Verfahren nach zumindest einem der vorhergehenden Ansprüche, **dadurch gekennzeichnet, dass** der Konverter während einer Warmlaufphase der Brennkraftmaschine eine Umsatzrate von NO zu NO₂ von mindestens 50 % erreicht, bevor der NOx-Speicher eine Temperatur erreicht hat, bei der er unter den ersten Betriebsbedingungen den NO₂-Gehalt des dem NOx-Speicher zugeführten Abgases um mindestens 75 %, insbesondere um mindestens 50 %, vermindert.

10. Verfahren nach zumindest einem der vorhergehenden Ansprüche, **dadurch gekennzeichnet, dass** der NOx-Speicher eine vergrößerte Oberfläche von mindestens 20 m²/g, insbesondere mindestens 40 m²/g und besonders vorteilhaft mindestens 100 m²/g hat, bezogen auf die von dem Abgasstrom erreichbare speichernde Masse.

11. Verfahren nach zumindest einem der vorhergehenden Ansprüche, **dadurch gekennzeichnet, dass** die Reduktion des gespeicherten NOx bei einem λ≤1,05 erfolgt.

12. Verfahren nach zumindest einem der vorhergehenden Ansprüche, **dadurch gekennzeichnet, dass** der NOx-Speicher ein Aluminiumoxid, insbesondere γ-Aluminiumoxid enthält.

13. Verfahren nach zumindest einem der vorhergehenden Ansprüche, **dadurch gekennzeichnet, dass** der NOx-Speicher ein Element aus der Gruppe der Alkalimetalle, Erdalkalimetalle, seltenen Erden, Lanthan, Titan, Kupfer und/oder Mangan enthält.

14. Verfahren nach zumindest einem der vorhergehenden Ansprüche, **dadurch gekennzeichnet, dass** der NOx-Speicher NOx und SOx aus dem Abgas bei Sauerstoffüberschuß absorbiert.

15. Verfahren nach zumindest einem der vorhergehenden Ansprüche, **dadurch gekennzeichnet, dass** der NOx-Speicher NOx und/oder SOx in einer reduzierten Atmosphäre und/oder bei niedriger Sauerstoffkonzentration freisetzt.

16. Verfahren nach zumindest einem der vorhergehenden Ansprüche, **dadurch gekennzeichnet, dass** eine nicht zwischen Konverter und Nox-Speicher angeordnete Sauerstoffkonzentrations-Bestimmungseinrichtung, die die Sauerstoffkonzentration bzw. eine die Sauerstoffkonzentration enthaltende Größe ermittelt, vorgesehen ist, die die Sauerstoffkonzentration bzw. die diese enthaltende Größe als eine Eingangsgröße an eine Steuerung gibt, die ein Beladen bzw. Entladen des NOx-Speichers veranlaßt.

17. Verfahren nach zumindest einem der vorhergehenden Ansprüche, **dadurch gekennzeichnet, dass** der NOx-Speicher NOx und/oder SOx bei erhöhter Temperatur freisetzt.

18. Verfahren nach zumindest einem der vorhergehenden Ansprüche 1 bis 16, **gekennzeichnet durch** eine Temperatur-Bestimmungseinrichtung, die die Temperatur bzw. eine die Temperatur enthaltende Größe des Gasstroms und/oder des NOx-Speichers ermittelt und die die Temperatur bzw. die diese enthaltende Größe als Eingangsgröße an eine Steuerung gibt, die ein Beladen bzw. Entladen des NOx-Speichers veranlaßt.

19. Verfahren nach zumindest einem der vorhergehenden Ansprüche 16 bis 18 **dadurch gekennzeichnet, dass** die Steuerung die Sauerstoffkonzentration und die Temperatur bzw. die diese enthaltenden Größen als Eingangsgrößen hat.

20. Verfahren nach zumindest einem der vorhergehenden Ansprüche, **dadurch gekennzeichnet, dass** dem NOx-Speicher ein Oxidationskatalysator, insbesondere ein Dreiwegekatalysator als eigenständige Einheit nachgeschaltet ist.

21. Selbstzündende Brennkraftmaschine mit einer Abgasanlage, die einen NOx-Speicher enthält, der geeignet ist, unter ersten Betriebsbedingungen NOx aus einem zugeführten Abgas der Brennkraftmaschine zu speichern und aus dem unter zweiten Betriebsbedingungen das gespeicherte NOx zur Reduktion desselben wieder freisetzbar ist, **dadurch gekennzeichnet, dass** das Abgas, bevor es dem NOx-Speicher unter den ersten Betriebsbedingungen zugeführt wird, durch einen Konverter geleitet wird, in dem ein in den Abgasen vorliegendes NO2/NO - Verhältnis vergrößert wird, und dass der Konverter ein Gesamtvolumen von 10 bis 25 % des Hubraums der Brennkraftmaschine und der Konverter eine Platinbeladung von ≥ 60 g/ft³ und der NOx-Speicher eine niedrigere Platinbelegung hat.

22. Selbstzündende Brennkraftmaschine nach Anspruch 21, **dadurch gekennzeichnet, dass** der NOx-Speicher eine Platinbelegung ≤ 50 g/ft3 aufweist.

23. Selbstzündende Brennkraftmaschine nach Anspruch 21 oder 22, **dadurch gekennzeichnet, dass** vor dem Lufteinlaß der Brennkraftmaschine, insbesondere stromaufwärts der Einmündung der Abgasrückführung, eine Drossel angeordnet ist, mittels der eine zu dem Lufteinlaß der Brennkraftmaschine strömende Luftmenge veränderbar ist.

24. Selbstzündende Brennkraftmaschine nach zumindest einem der Ansprüche 21 bis 23, **dadurch gekennzeichnet, dass** der Konverter einen Metallträgerkörper hat.

25. Selbstzündende Brennkraftmaschine nach zumindest einem der Ansprüche 21 bis 24, **dadurch gekennzeichnet, dass** die Brennkraftmaschine ein Direkteinspritzer ist.

## Claims

1. Exhaust gas purification method for a compression-ignition internal combustion engine, in which the exhaust gases from the internal combustion engine are fed to an NOx store, which is suitable for storing NOx from the exhaust gas supplied under first operating conditions and for releasing the stored NOx again in order for it to be reduced under second operating conditions, **characterized in that** the exhaust gas, before it is fed to the NOx store under the first operating conditions, is passed through a converter, in which an NO₂/NO ratio which is present in the exhaust gases is increased, **in that** the converter has a total volume of from 10 to 25% of the capacity of the internal combustion engine and a platinum loading of ≥ 60 g/ft³, and the NOx store has a lower platinum occupancy.

2. Method according to Claim 1, **characterized in that** the NOx store has a platinum occupancy of ≤ 50 g/ft³.

3. Method according to Claim 1, **characterized in that** via exhaust gas recirculation a partial stream of the exhaust gases is fed to the air intake section of the internal combustion engine to form an exhaust gas partial stream/intake air ratio under the first operating conditions and the exhaust gas partial stream/intake ratio is lowered under the second operating conditions.

4. Method according to at least one of the preceding claims, **characterized in that** upstream of the NOx store there is a wide-band lambda sensor, the signals from which are passed to a control unit as input variable which causes the NOx store to be loaded or relieved.

5. Method according to at least one of the preceding claims, **characterized in that** the internal combustion engine has a direct injection of fuel.

6. Method according to at least one of the preceding claims, **characterized in that** the internal combustion engine is a diesel engine.

7. Method according to at least one of the preceding claims, **characterized in that** in the converter at a temperature of ≥ 230°C at least 50% of the NO contained in the exhaust gas and carried into the converter with the exhaust gas is converted into NO₂.

8. Method according to at least one of the preceding claims, **characterized in that** the converter used is an oxidation catalytic converter.

9. Method according to at least one of the preceding claims, **characterized in that** the converter, during a warming-up phase of the internal combustion engine, reaches an NO to NO₂ conversion rate of at least 50% before the NOx store has reached a temperature at which, under the first operating conditions, it lowers the NO₂ content of the exhaust gas fed to the NOx store by at least 75%, in particular by at least 50%.

10. Method according to at least one of the preceding claims, **characterized in that** the NOx store has an increased surface area of at least 20 m²/g, in particular at least 40 m²/g and particularly advantageously at least 100 m²/g, based on the storage mass that can be attained from the exhaust-gas stream.

11. Method according to at least one of the preceding claims, **characterized in that** the reduction of the stored NOx is carried out at a λ≤1.05.

12. Method according to at least one of the preceding claims, **characterized in that** the NOx store contains an aluminium oxide, in particular γ-aluminium oxide.

13. Method according to at least one of the preceding claims, **characterized in that** the NOx store contains an element selected from the group consisting of the alkali metals, alkaline-earth metals, rare earths, lanthanum, titanium, copper and/or manganese.

14. Method according to at least one of the preceding claims, **characterized in that** the NOx store absorbs NOx and SOx out of the exhaust gas under an excess of oxygen.

15. Method according to at least one of the preceding claims, **characterized in that** the NOx store releases NOx and/or SOx in a reduced atmosphere and/or at a low oxygen concentration.

16. Method according to at least one of the preceding claims, **characterized in that** a device for determining the oxygen concentration, which is not arranged between the converter and the NOx store and determines the oxygen concentration or a variable which includes the oxygen concentration, is provided, which device passes the oxygen concentration or the variable which includes it as an input variable to a control unit, which causes the NOx store to be loaded or relieved.

17. Method according to at least one of the preceding claims, **characterized in that** the NOx store releases NOx and/or SOx at elevated temperature.

18. Method according to at least one of the preceding Claims 1 to 16, **characterized by** a temperature-determining device, which determines the temperature or a variable which includes the temperature of the gas stream and/or of the NOx store and which passes the temperature or the variable which includes it as an input variable to a control unit, which causes the NOx store to be loaded or relieved.

19. Method according to at least one of the preceding Claims 16 to 18, **characterized in that** the control unit has the oxygen concentration and the temperature or the variables which include these parameters as input variables.

20. Method according to at least one of the preceding claims, **characterized in that** an oxidation catalytic converter, in particular a three-way catalytic converter as an independent unit, is connected downstream of the NOx store.

21. Compression-ignition internal combustion engine having an exhaust gas system which includes an NOx store which is suitable for storing NOx from a supplied exhaust gas from the internal combustion engine under first operating conditions and can release the stored NOx again in order for it to be reduced under second operating conditions, **characterized in that** the exhaust gas, before it is fed to the NOx store under the first operating conditions, is passed through a converter, in which an NO₂/NO ratio which is present in the exhaust gases is increased, and **in that** the converter has a total volume of from 10 to 25% of the capacity of the internal combustion engine and the converter has a platinum loading of ≥ 60 g/ft³ and the NOx store has a lower platinum occupancy.

22. Compression-ignition internal combustion engine according to Claim 21, **characterized in that** the NOx store has a platinum occupancy of ≤ 50 g/ft³.

23. Compression-ignition internal combustion engine according to Claim 21 or 22, **characterized in that** a throttle, which can be used to alter a quantity of air flowing to the air inlet of the internal combustion engine, is arranged upstream of the air inlet of the internal combustion engine, in particular upstream of the location where the exhaust gas recirculation opens out.

24. Compression-ignition internal combustion engine according to at least one of Claims 21 to 23, **characterized in that** the converter has a metal support body.

25. Compression-ignition internal combustion engine according to at least one of Claims 21 to 24, **characterized in that** the internal combustion engine is a direct injection engine.

## Revendications

1. Procédé d'épuration de gaz d'échappement pour un moteur à combustion interne à auto-allumage, dans lequel les gaz d'échappement du moteur à combustion interne sont acheminés à un accumulateur de NOₓ qui est prévu pour stocker, dans des premières conditions de fonctionnement, du NOₓ provenant du gaz d'échappement acheminé, et duquel le NOₓ stocké est à nouveau libéré dans des deuxièmes conditions de fonctionnement en vue de sa réduction, **caractérisé en ce que** le gaz d'échappement, avant d'être acheminé à l'accumulateur de NOₓ dans les premières conditions de fonctionnement, est guidé à travers un convertisseur dans lequel un rapport de NO₂/NO existant dans les gaz d'échappement est augmenté, **en ce que** le convertisseur a un volume total de 10 à 25% de la cylindrée du moteur à combustion interne et une charge de platine de ≥ 60 g/pied³ et l'accumulateur de NOₓ a une teneur en platine moins importante.

2. Procédé selon la revendication 1, **caractérisé en ce que** l'accumulateur de NOₓ présente une teneur en platine ≤ 50 g/pied³.

3. Procédé selon la revendication 1, **caractérisé en ce qu'**un courant partiel des gaz d'échappement est acheminé au conduit d'admission d'air du moteur à combustion interne par le biais d'une recirculation de gaz d'échappement en formant un rapport de courant partiel de gaz d'échappement/air d'admission dans les premières conditions de fonctionnement et le rapport courant partiel de gaz d'échappement/air d'admission est réduit dans les deuxièmes conditions de fonctionnement.

4. Procédé selon au moins l'une quelconque des revendications précédentes, **caractérisé en ce que** l'on prévoit avant l'accumulateur de NOₓ une sonde lambda à large bande dont les signaux sont envoyés à une commande sous forme de valeurs d'entrée, laquelle commande provoque un chargement ou un déchargement de l'accumulateur de NOₓ.

5. Procédé selon au moins l'une quelconque des revendications précédentes, **caractérisé en ce que** le moteur à combustion interne possède une injection directe de carburant.

6. Procédé selon au moins l'une quelconque des revendications précédentes, **caractérisé en ce que** le moteur à combustion interne est un moteur diesel à combustion interne.

7. Procédé selon au moins l'une quelconque des revendications précédentes, **caractérisé en ce que,** dans le convertisseur, à une température ≥ 230°C, au moins 50% du NO contenu dans les gaz d'échappement et acheminé avec les gaz d'échappement dans le convertisseur, est converti en NO₂.

8. Procédé selon au moins l'une quelconque des revendications précédentes, **caractérisé en ce que** l'on utilise comme convertisseur un catalyseur d'oxydation.

9. Procédé selon au moins l'une quelconque des revendications précédentes, **caractérisé en ce que** le convertisseur, pendant une phase de fonctionnement à chaud du moteur à combustion interne, atteint un taux de conversion de NO en NO₂ d'au moins 50%, avant que l'accumulateur de NOₓ ait atteint une température à laquelle il réduit, dans les premières conditions de fonctionnement, la teneur en NO₂ du gaz d'échappement acheminé à l'accumulateur de NOₓ d'au moins 75%, notamment d'au moins 50%.

10. Procédé selon au moins l'une quelconque des revendications précédentes, **caractérisé en ce que** l'accumulateur de NOₓ a une surface agrandie d'au moins 20 m²/g, notamment d'au moins 40 m²/g et particulièrement avantageusement de 100 m²/g, par rapport à la masse à stocker pouvant être atteinte par le courant de gaz d'échappement.

11. Procédé selon au moins l'une quelconque des revendications précédentes, **caractérisé en ce que** la réduction du NOₓ stocké s'effectue à λ ≤ 1,05.

12. Procédé selon au moins l'une quelconque des revendications précédentes, **caractérisé en ce que** l'accumulateur de NOₓ contient un oxyde d'aluminium notamment l'oxyde d'aluminium gamma.

13. Procédé selon au moins l'une quelconque des revendications précédentes, **caractérisé en ce que** l'accumulateur de NOₓ contient un élément parmi le groupe des métaux alcalins, des métaux alcalino-terreux, des terres rares, du lanthane, du titane, du cuivre et/ou du manganèse.

14. Procédé selon au moins l'une quelconque des revendications précédentes, **caractérisé en ce que** l'accumulateur de NOₓ absorbe les NOₓ et les SOₓ du gaz d'échappement en présence d'un excès d'oxygène.

15. Procédé selon au moins l'une quelconque des revendications précédentes, **caractérisé en ce que** l'accumulateur de NOₓ libère les NOₓ et/ou les SOₓ dans une atmosphère réduite et/ou à une concentration d'oxygène réduite.

16. Procédé selon au moins l'une quelconque des revendications précédentes, **caractérisé en ce que** l'on prévoit un dispositif pour déterminer la concentration en oxygène non disposé entre le convertisseur et l'accumulateur de NOₓ, qui détermine la concentration en oxygène ou une valeur contenant la concentration en oxygène, lequel fournit la concentration en oxygène ou la valeur la contenant sous forme de valeur d'entrée à une commande qui provoque un chargement ou un déchargement de l'accumulateur de NOₓ.

17. Procédé selon au moins l'une quelconque des revendications précédentes, **caractérisé en ce que** l'accumulateur de NOₓ libère des NO_{X} et/ou des SOₓ à une température élevée.

18. Procédé selon au moins l'une quelconque des revendications précédentes 1 à 16, **caractérisé par** un dispositif de détermination de la température, qui détermine la température ou une valeur contenant la température du courant gazeux et/ou de l'accumulateur de NOₓ et qui fournit la température ou la valeur la contenant sous forme de valeur d'entrée à une commande qui provoque un chargement ou un déchargement de l'accumulateur de NOx.

19. Procédé selon au moins l'une quelconque des revendications précédentes 16 à 18, **caractérisé en ce que** la commande reçoit en tant que valeurs d'entrée la concentration en oxygène et la température ou les valeurs les contenant.

20. Procédé selon au moins l'une quelconque des revendications précédentes, **caractérisé en ce que** l'on monte après l'accumulateur de NOₓ un catalyseur d'oxydation, notamment un catalyseur à trois voies sous forme d'unité autonome.

21. Moteur à combustion interne à auto-allumage comprenant une installation de gaz d'échappement qui contient un accumulateur de NOₓ prévu pour stocker, dans des premières conditions de fonctionnement, du NOₓ provenant du gaz d'échappement du moteur à combustion interne acheminé et duquel le NOₓ stocké peut être à nouveau libéré dans des deuxièmes conditions de fonctionnement en vue de sa réduction, **caractérisé en ce que** le gaz d'échappement, avant d'être acheminé à l'accumulateur de NOₓ dans les premières conditions de fonctionnement, est guidé à travers un convertisseur dans lequel un rapport de NO_{2/}NO existant dans les gaz d'échappement est augmenté, et **en ce que** le convertisseur a un volume total de 10 à 25% de la cylindrée du moteur à combustion interne et une charge de platine de ≥ 60 g/pied³ et l'accumulateur de NOₓ a une teneur en platine moins importante.

22. Moteur à combustion interne à auto-allumage selon la revendication 21, **caractérisé en ce que** l'accumulateur de NOₓ présente une teneur en platine ≤ 50 g/pied³.

23. Moteur à combustion interne à auto-allumage selon la revendication 21 ou 22, **caractérisé en ce que** l'on prévoit, avant l'admission d'air du moteur à combustion interne, notamment en amont de l'embouchure de la recirculation de gaz d'échappement, une soupape d'étranglement avec laquelle la quantité d'air s'écoulant vers l'admission d'air du moteur à combustion interne peut être modifiée.

24. Moteur à combustion interne à auto-allumage selon au moins l'une quelconque des revendications 21 à 23, **caractérisé en ce que** le convertisseur a un corps de support métallique.

25. Moteur à combustion interne à auto-allumage selon au moins l'une quelconque des revendications 21 à 24, **caractérisé en ce que** le moteur à combustion interne est à injection directe.
